# EUROPEAN PATENT APPLICATION

(11) **EP 4 428 642 A1**
(43) Date of publication of application: **11.09.2024**
(21) Application number: 23219140.3
(22) Date of filing: 21.12.2023
(51) Int. Cl.: G05B 19/418

(54) **METHOD FOR MONITORING A MANUFACTURING MACHINE**

(30) Priority: 07.03.2023 IT 202300004230
(71) Applicant: G.D S.p.A., 40133 Bologna (BO) (IT)
(72) Inventor: LEONI, Francesco, 40133 Bologna (IT); BARBIERI, Giulio, 40133 Bologna (IT); CESARINI, Maria Eleonora, 40133 Bologna (IT); FRONTINI, Alessio, 40133 Bologna (IT)
(74) Representative: Frontoni, Stefano

(57) **Abstract**

Described herein is a method for monitoring a manufacturing machine (200) that performs at least one operation on articles (100). The method comprises:
- via at least one camera (212), acquiring a video stream comprising a sequence of frames of said operation and saving said video stream on a storage medium (220B) for a pre-set time interval, after which, on the storage medium (220B), a new video stream comprising a new sequence of frames of said operation is overwritten on the previous video stream;
- via at least one sensor (204, 206), acquiring data indicating a condition of said operation performed by said manufacturing machine (200); and
- when, via said sensor (204, 206), an anomalous datum of said condition of said operation is acquired, transferring at least a part of said video stream saved on said storage medium (220B) to a second storage medium (250) accessible through a user interface (240), preferably the user interface of the machine (200) itself.

## Description

The present invention regards a method for monitoring a manufacturing machine that performs at least one operation on articles.

The solution described herein refers, in particular, to the industrial field of production of articles and/or of their packaging.

In this context, it is known to use automatic control systems for detecting any possible malfunctioning of a manufacturing machine and/or for predicting the possible occurrence of malfunctioning in order to implement appropriate adjustments capable of preventing them.

The aforesaid systems may, for example, make use of sensors and video cameras.

In this context, there is, however, felt the need for a monitoring system configured for conducting an activity of diagnosis on operation of the machine in order to seek the causes of any malfunctioning that has occurred.

Today, this type of activity proves very complex and burdensome in so far as it requires the operator to access entire video recordings of operation of the machine acquired by the cameras, and simultaneously the data detected by the sensors, and analyse the ensemble of this material to understand the causes of any malfunctioning that has occurred.

In this context, the present invention proposes a solution for monitoring a manufacturing machine that will be able to facilitate the aforesaid activity of diagnosis by the operator.

In particular, the present invention regards a monitoring method according to claim 1 and a manufacturing machine according to claim 9.

The claims form an integral part of the teaching provided herein.

Further characteristics and advantages of the present invention will emerge clearly from the ensuing description with reference to the annexed drawings, which are provided purely by way of non-limiting example and in which:
- Figure 1 is a schematic illustration of an example of manufacturing machine according to the present invention; and
- Figure 2 is a schematic representation of some components of the machine of Figure 1.

In the ensuing description, various specific details are illustrated aimed at enabling an in-depth understanding of the embodiments. The embodiments may be provided without one or more of the specific details, or with other methods, components, or materials, etc. In other cases, known structures, materials, or operations are not illustrated or described in detail so that various aspects of the embodiment will not be obscured.

The references used herein are provided merely for convenience and hence do not define the sphere of protection or the scope of the embodiments.

As anticipated above, the solution described herein regards monitoring of a manufacturing machine configured for performing at least one operation on articles.

The above machine may, for example, belong to a line for production and/or packaging of articles.

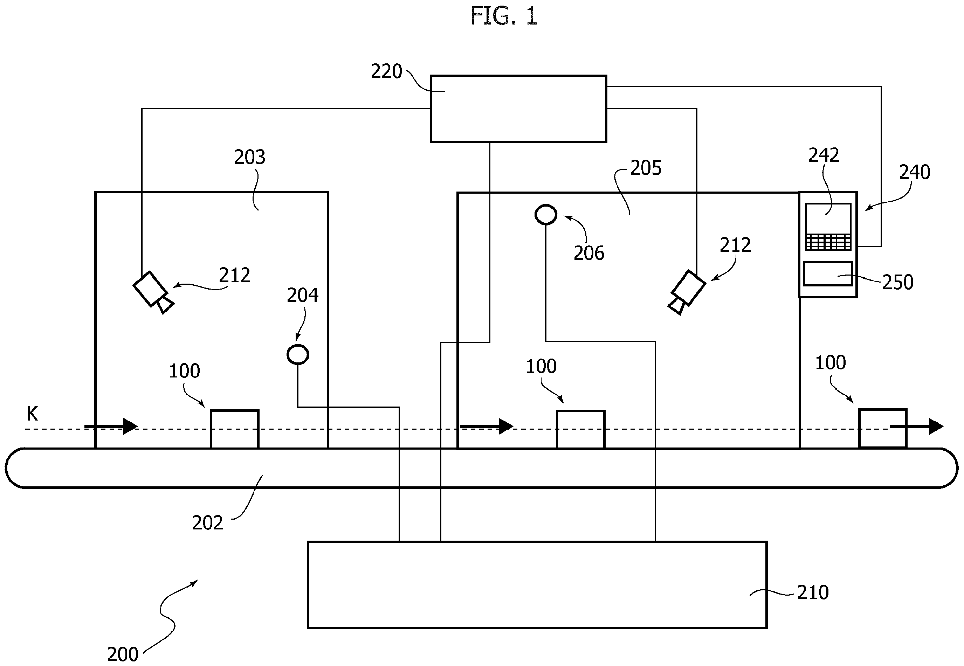

In this connection, Figure 1 is a schematic illustration of a manufacturing machine 200 comprising a first workstation 203, a second workstation 205, and a conveyor 202 for movement of articles 100, in succession, along a path of advance K that traverses the two workstations 203 and 205.

Each workstation comprises at least one operating unit (not illustrated) for execution of an operation on the article 100 that is located within the workstation itself.

The manufacturing machine 200 comprises a control unit 210 configured for governing the operating units of the two workstations 203, 205 according to pre-set operating modes.

The machine 200 further comprises a first sensor 204 for detecting an operating condition of the operation executed on an article 100 within the workstation 203, and, likewise, a second sensor 206 for detecting an operating condition of the operation executed on an article 100 within the second workstation 205. The sensors 204, 206 may, for example, be configured for detecting an operating parameter of the operating unit of the machine (for example, a speed, a force, a pressure, etc.) or else for detecting a state of the article 100 undergoing the operation (for example, a position).

Preferably, the control unit 210 is configured for adjusting the operating parameters of the operating units of the two workstations 203, 205 as a function of the data coming from the two sensors 204, 206 so as to implement corrective interventions on the operations performed, when necessary.

The manufacturing machine 200 further comprises at least one camera 212 within each workstation, which is configured for recording the operation carried out within the workstation. Incidentally, by the term "camera" is here to be understood any from among a photographic camera, a video camera, and a TV camera. Preferably, each camera 212 is a high-speed video camera.

Preferably, each camera 212 is supported within each workstation by means of an articulated arm fixed to the inner walls of the machine itself.

Preferably, each camera 212 is set within the corresponding workstation in a position that is hard to reach by monitoring on the part of an operator.

The manufacturing machine 200 comprises at least one control unit 220 configured for acquisition of the frames captured by the two cameras 212.

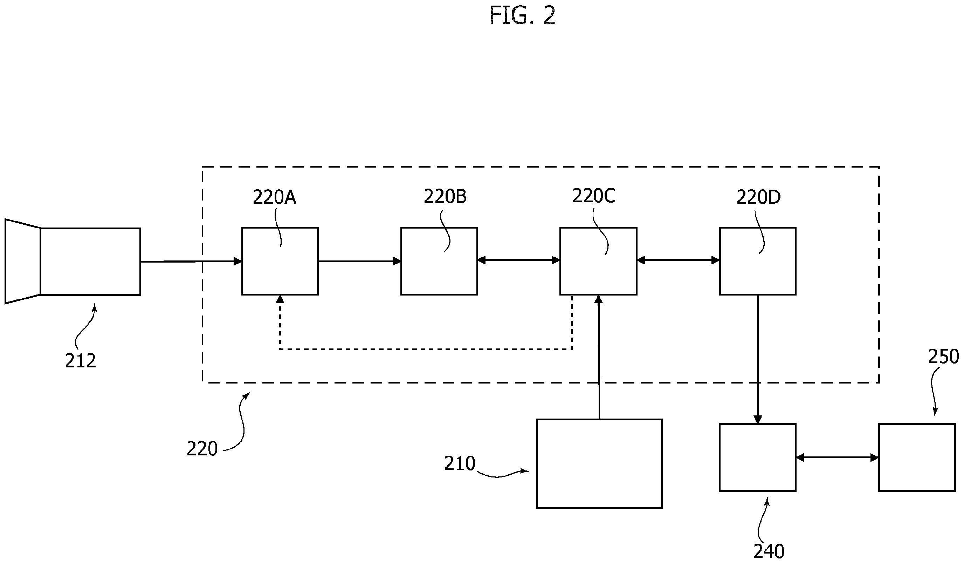

In one or more preferred embodiments like the one illustrated (see Figure 2), the control unit 220 comprises a module 220A for acquisition of the frames captured by the cameras 212, a volatile storage medium 220B (for example, a RAM with buffer), a processing module 220C, and a communication module 220D (for example, for communications on an Ethernet system or in wireless mode).

For ease of treatment, represented in the example illustrated is a single control unit 220 in communication with each of the two cameras 212. In any case, it is also possible to envisage embodiments in which one respective control unit 220 is associated to each camera. On the other hand, the control unit 220 may even be defined by a control module forming part of the control unit 210 itself of the machine 200.

In addition, the manufacturing machine 200 comprises: a user interface 240 equipped with a screen 242; and a nonvolatile storage medium 250 (for example, an HDD or SSD storage medium, or more in general a PC) accessible through the user interface 240.

The control unit 220 is set in communication with the nonvolatile storage medium 250 by way of its communication module 220D.

According to an important characteristic of the solution described herein, the control unit 220 is configured for acquiring, through each camera 212, a video stream comprising a sequence of frames of the operation executed in the workstation 203 or 205, and for saving the video stream on the volatile storage medium 220B for a pre-set time interval.

After the aforesaid interval, the control unit 220 overwrites a new video stream, comprising a new sequence of frames of the operation, on the video stream previously saved on the volatile storage medium 220B.

The video streams acquired by the two cameras 212 are preferably saved in distinct positions of the volatile memory 220B. In the alternative embodiment referred to above in which one control unit is provided for each video camera, the video streams acquired by the two cameras 212 are, instead, saved on the volatile storage media 220B of the respective control units 220.

Furthermore, the control unit 220 is configured for transferring at least a part of the video streams saved on the volatile storage medium 220B to the nonvolatile storage medium 250, when, through the sensor 204 or 206, an anomalous datum of the operating condition being monitored is acquired.

In view of the foregoing, the solution described herein thus envisages acquiring continuously a video stream regarding the operation monitored and saving it temporarily on the volatile storage medium 220B by overwriting the last frames acquired on frames previously saved. Moreover, this solution envisages saving the video stream acquired, in a permanent way on the nonvolatile storage medium 250, only upon occurrence of an anomalous condition of the operation being monitored, and preferably only the part of the video stream that has been acquired in concomitance with occurrence of the aforesaid anomalous condition.

The part of the video stream saved on the nonvolatile storage medium 250 may be displayed directly on the screen 242 of the user interface 240, and the operator hence has the immediate possibility of analysing the steps of the operation being monitored concomitant with occurrence of the aforesaid anomalous condition detected by the sensor 204 or 206. The user interface 240 is preferably that of the machine 200 itself.

Preferably, acquisition of the video stream occurs uninterruptedly, not only during execution of the operation on an article, but also in the time intervals between one operation and the next.

In one or more preferred embodiments, the control unit 210, which receives the data from the two sensors 204 and 206, is configured for transmitting an activation signal to the control unit 220 to transfer the video stream acquired and saved on the volatile storage medium 220B to the nonvolatile storage medium 250 when the data coming from the sensor 204 or 206 indicate values falling outside a reference interval.

On the other hand, the processing module 220C of the control unit 220 is configured for selecting a part of the video stream saved on the volatile storage medium 220B and transferring the part of the video stream selected to the nonvolatile storage medium 250 through the communication module 220D.

In general, the selected part of the video stream is a subset of the frames saved on the volatile storage medium 220B, which is constituted by frames acquired in a time window around the instant when the aforesaid anomalous condition has occurred. In this way, the above part of video stream is such as to represent the significant events of the operation being monitored, which precede, are simultaneous with, and preferably are subsequent to occurrence of the anomalous condition.

Preferably, the initial frame of the part of video stream selected is identified on the basis of a time of advance with respect to the instant when the aforesaid anomalous condition has been detected, and likewise the final frame is identified on the basis of a time of delay with respect to the aforesaid instant. In one or more embodiments, the part of video stream selected may present a pre-set length.

In view of the foregoing, the solution described above makes it possible to develop a method for monitoring the manufacturing machine 200 that comprises the following steps:
- via the two cameras 212, acquiring a first video stream comprising a sequence of frames of the operation executed in the workstation 203 and acquiring a second video stream comprising a sequence of frames of the operation executed in the workstation 205;
- saving the first and second video streams on the volatile storage medium or media 220B for a pre-set time interval, after which, on the storage medium or media 220B, a new first video stream, comprising a new sequence of frames of the operation executed in the workstation 203, and a new second video stream, comprising a new sequence of frames of the operation executed in the workstation 205, are overwritten on the previous first video stream and on the previous second video stream, respectively;

- via the two sensors 204, 206, acquiring, respectively, data indicating a condition of the operation executed in the workstation 203 and data indicating a condition of the operation executed in the workstation 205; and
- when, via the sensor 204 or 206, an anomalous datum of the condition of the operation executed in the workstation 203 or 205 is acquired, transferring at least a part of the first video stream or second video stream saved on the volatile storage medium 220B to the nonvolatile storage medium 250.

The part of video stream transferred to the nonvolatile storage medium 250 may be displayed on the screen 242 of the user interface 240.

Of course, without prejudice to the principle of the invention, the details of construction and the embodiments may vary, even significantly, with respect to what has been illustrated herein purely by way of non-limiting example, without thereby departing from the scope of the invention, as defined by the annexed claims.

## Claims

1. A method for monitoring a manufacturing machine (200) that performs at least one operation on articles (100), the method comprising:
- via at least one camera (212), acquiring a video stream comprising a sequence of frames of said operation, and saving said video stream on a storage medium (220B) for a pre-set time interval, after which, on the storage medium (220B), a new video stream comprising a new sequence of frames of said operation is overwritten on the previous video stream;
- via at least one sensor (204, 206), acquiring data indicating a condition of said operation performed by said manufacturing machine (200);
- when, via said sensor (204, 206), an anomalous datum of said condition of said operation is acquired, transferring at least a part of said video stream saved on said storage medium (220B) to a second storage medium (250) accessible through a user interface (240), preferably the user interface of the machine (200) itself.

2. The method according to claim 1, further comprising displaying on a screen (242) of said user interface (240) said video stream transferred to said second storage medium (250), said video stream transferred to said second storage medium (250) representing an anomalous condition of said operation.

3. The method according to claim 1 or claim 2, wherein the step of acquiring the video stream occurs uninterruptedly during execution of said operation, and preferably uninterruptedly also during the time interval between one operation and the next.

4. The method according to claim 1 or claim 2 or claim 3, wherein transferring at least a part of said video stream saved on said storage medium (250) includes transferring a part of said video stream that comprises an initial frame corresponding to a frame of said video stream acquired at an instant prior to the instant when said anomalous datum of said condition is acquired, and a final frame corresponding to a frame of said video stream acquired at an instant subsequent to or coinciding with the instant when said anomalous datum of said condition is acquired.

5. The method according to claim 4, wherein said initial frame is determined on the basis of a given time of advance with respect to the instant when said anomalous datum of said condition is acquired.

6. The method according to any one of the preceding claims, wherein said storage medium (220B) is a volatile memory.

7. The method according to any one of the preceding claims, wherein said second storage medium (250) is a nonvolatile memory.

8. The method according to any one of the preceding claims, wherein said camera (212) is a high-speed camera.

9. A manufacturing machine (200) configured for performing at least one operation on articles (100), comprising:
- at least one camera (212) configured for recording said at least one operation;
- at least one sensor (204, 206) configured for detecting a condition of said operation;
- a first storage medium (220B);
- a second storage medium (250) accessible through a user interface (240); and
- at least one control unit (220; 210) configured for implementing a method according to any one of claims 1 to 8.

10. The machine according to claim 9, wherein said first storage medium (220B) is a volatile memory.

11. The machine according to claim 9 or claim 10, wherein said second storage medium (250) is a nonvolatile memory.

12. The machine according to any one of claims 9 to 11, wherein said camera (212) is a high-speed camera.

13. The machine according to any one of claims 9 to 12 configured for performing a plurality of operations on articles (100), comprising: a plurality of operating units for execution of said operations; a plurality of cameras (212) configured for recording said operations; and a plurality of sensors (204, 206) configured for detecting a condition of said operations.
